# EUROPÄISCHE PATENTSCHRIFT

(11) **EP 3 682 618 B1**
(45) Veröffentlichungstag und Bekanntmachung des Hinweises auf die Patenterteilung: **26.02.2025**
(21) Anmeldenummer: 18793184.5
(22) Anmeldetag: 09.10.2018
(51) Int. Cl.: H04L 67/12, G08C 17/02, H04L 12/66, H04W 4/40, H04W 4/42

(54) **STEUERVORRICHTUNG FÜR EIN MASSENTRANSPORTMITTEL UND VERFAHREN ZUM AUSTAUSCHEN VON DATEN DARIN**
CONTROL DEVICE FOR A MASS TRANSPORT MEANS AND METHOD FOR EXCHANGING DATA THEREIN
DISPOSITIF DE COMMANDE POUR UN MOYEN DE TRANSPORT DE MASSE ET PROCÉDÉ D'ÉCHANGE DES DONNÉES DANS CELUI-CI

(30) Priorität: 09.10.2017 DE 102017217942
(43) Veröffentlichungstag der Anmeldung: 22.07.2020
(73) Patentinhaber: Dr. Techn. J. Zelisko GmbH, 2340 Mödling (AT)
(72) Erfinder: HÜLSEMANN, Matthias, 2340 Mödling (AT)
(74) Vertreter: Prüfer & Partner mbB Patentanwälte · Rechtsanwälte
(86) Internationale Anmeldenummer: PCT/EP2018/077449
(87) Internationale Veröffentlichungsnummer: WO 2019/072830

(56) Entgegenhaltungen:
- DE-A1- 10 105 858
- DE-A1- 10 105 858
- DE-A1- 102013 003 953
- DE-A1- 102013 021 495
- DE-A1- 102015 000 497
- DE-A1- 102015 000 497
- LUDWIG D ET AL: "ZWEISYSTEM-FAHRZEUG KARLSRUHE-STADTBAHNWAGEN MIT NAS-HOCHENERGIESPEICHER", EB- ELEKTRISCHE BAHNEN, DIV-DEUTSCHER INDUSTRIEVERLAG, DE, vol. 89, no. 6, 1 June 1991 (1991-06-01), pages 196 - 198, XP000225861, ISSN: 0013-5437

## Beschreibung

Die vorliegende Erfindung bezieht sich auf eine Steuervorrichtung für ein Massentransportmittel, das einen Bordrechner aufweist, der über erste Datenleitungen mit ersten Peripherievorrichtungen verbunden ist, um mit diesen über das IBIS- oder IBIS-IP-Protokoll Daten auszutauschen. Die vorliegende Erfindung bezieht sich auch auf ein Verfahren zum Austauschen von Daten über die Steuervorrichtung.

### STAND DER TECHNIK

Als ein bekanntes Datenübertragungsprotokoll für Informations- und Steuerungsaufgaben in einem Massentransportmittel wie zum Beispiel einem Linienbus oder Personenzug ist das so genannte integrierte Bordinformationssystem bekannt, das durch IBIS abgekürzt wird. Die dazugehörige Hardware umfasst einen zentralen Bordrechner, der über ein Bussystem bzw. über Datenleitungen mit einer Benutzerschnittstelle und Peripherievorrichtungen verbunden ist. Darüber werden die Peripherievorrichtungen wie zum Beispiel eine Videokamera, eine Heckanzeige, eine Frontanzeige, eine Seitenanzeige, einen Fahrscheinentwerter, ein Fahrgastzähler und TFT-Monitore des Massentransportmittels gesteuert oder ausgelesen.

Das IBIS- oder IBIS-IP-Protokoll ist in Publikationen des VDV (früher VÖV) definiert. Eine grundlegende Definition für das IBIS-Protokoll findet sich in der *"VDV-Schrift 300, Integriertes Bordinformationssystem (IBIS) Hauptwerk K1042, Ausgabe 06*/*84".* Definitionen für das IBIS-IP-Protokoll finden sich in den VDV-Schriften Nr. 301-X. Die IBIS- und IBIS-IP-Protokolle sind gängiger Standard im Personenverkehr, so dass auf sie nicht weiter eingegangen wird.

Zum Beispiel sind der Fahrscheindrucker und der Bordrechner direkt mit dem Fahrzeug verkabelt, und sie haben somit eine dauerhafte Verbindung u.a. zum IBIS-Sternpunkt.

Dies ist vor allem in Linienbussen zwingend notwendig, um beispielsweise die Außen- und Innenanzeigen, Fahrscheinentwerter, TFT-Monitore, Fahrgastzählsysteme etc. abfragen und mit Daten versorgen zu können. Die Daten werden über das IBIS- oder IBIS-IP-Protokoll übertragen.

Die DE 10 2015 000 497 A1 beschreibt ein Verfahren zur Erfassung von fahrtenbezogenen Informationen von Fahrgästen von öffentlichen Verkehrsmitteln mit einer fahrzeuggebundenen Steuerungseinheit und einer mobilen Anzeige- und Eingabeeinheit. Dabei ist das Fahrzeug mit einer Steuerungseinheit ausgerüstet, die über einen fahrzeuggebundenen Kommunikationsbus mit dem Bordcomputer bidirektional verbunden ist und mit einer mobilen Anzeige- und Eingabevorrichtung bidirektional drahtlos kommuniziert.

Die DE 101 05 858 A1 beschreibt ein Kommunikationssystem eines Fahrzeugs, mit einem ersten Bus, an dem mit dem Fahrzeug verbundene Einrichtungen angeschlossen sind, die eingerichtet sind, über den ersten Bus untereinander und/oder mit einer am ersten Bus angeschlossenen Steuerung Daten auszutauschen. Dabei wird ein zweiter Bus mit hoher Übertragungsgeschwindigkeit vorgeschlagen, an dem eine mit einer drahtlos arbeitenden Fernübertragungseinrichtung zusammenwirkende Kommunikationsschnittstelle und eine Busschnittstelle angeschlossen sind, wobei die Kommunikationsschnittstelle eingerichtet ist, über die Fernübertragungseinrichtung mit einer beabstandeten Station Daten auszutauschen, die Busschnittstelle auch mit dem ersten Bus verbunden und eingerichtet ist, Daten vom ersten Bus auf den zweiten Bus und umgekehrt zu übertragen, und der zweite Bus mit einer Computerschnittstelle zum Anschluss eines Computers verbunden ist. Die DE 10 2013 021 495 A1 beschreibt ein Verfahren zur Bereitstellung von Informationen und Services für Fahrgäste öffentlicher Verkehrsmittel mit Smartphones und mobilen Handgeräten.

Die DE 10 2013 003953 A1 beschreibt ein Verfahren zur Steuerung akustischer und/oder optischer Informationselemente in Fahrzeugen.

Es ist die Aufgabe der vorliegenden Erfindung, eine Steuervorrichtung für ein Massentransportmittel und ein Verfahren zum Austauschen von Daten vorzusehen, die eine verbesserte Flexibilität gegenüber dem Stand der Technik haben. Diese Aufgabe wird gelöst durch die Steuervorrichtung für ein Massentransportmittel mit den Merkmalen des Anspruchs 1 und durch das Verfahren zum Austauschen von Daten in einem Massentransportmittel mit den Merkmalen des Anspruchs 6. Die vorliegende Erfindung ist in den Unteransprüchen weitergebildet.

### KURZFASSUNG DER VORLIEGENDEN ERFINDUNG

Das Massentransportmittel, für das die erfindungsgemäße Steuervorrichtung bestimmt ist, hat üblicherweise einen Bordrechner, der über erste Datenleitungen mit ersten Peripherievorrichtungen verbunden ist, um mit diesen über das IBIS- oder IBIS-IP-Protokoll Daten auszutauschen. Die Steuervorrichtung ist gemäß der vorliegenden Erfindung dazu konfiguriert, mit dem Bordrechner über eine zentrale Datenleitung verbunden zu werden, und die Steuervorrichtung ist dazu konfiguriert, über zweite Datenleitungen mit zweiten Peripherievorrichtungen verbunden zu werden, um mit diesen ohne dem IBIS- oder IBIS-IP-Protokoll Daten auszutauschen. Dabei kann es sich um ein beliebiges Protokoll oder gar kein Protokoll handeln. Die Steuervorrichtung weist eine Funkschnittstelle auf, die daran angepasst ist, eine drahtlose Funkverbindung mit einer drahtlosen Benutzerschnittstelle derart einzurichten, dass ein Datenaustausch zwischen einer drahtlosen Benutzerschnittstelle und sowohl den ersten als auch den zweiten Peripherievorrichtungen über die Steuervorrichtung erfolgt. Damit wird eine erhöhte Flexibilität des gesamten Steuersystems erreicht, indem beliebige zweite Peripherievorrichtungen über ein beliebiges Protokoll oder gar kein Protokoll in das Steuersystem integriert werden können. Darüber hinaus ermöglicht die drahtlose Benutzerschnittstelle einen Zugriff auf die Steuerung der ersten und zweiten Peripherievorrichtungen von einem beliebigen Ort aus.

Erfindungsgemäß umfassen die ersten Peripherievorrichtungen eine Videokamera, eine Heckanzeige, eine Frontanzeige, eine Seitenanzeige, einen Fahrscheinentwerter, einen Fahrgastzähler und/oder TFT-Monitore.

Als die zweiten Peripherievorrichtungen werden durch die vorliegende Erfindung ein Türsignalgeber, ein Wegsignalgeber, ein Bakensignalgeber, ein Tachosignalgeber, ein Wagenhaltsignalgeber, ein CAN-Bus, ein LAN/Ethernet-Anschluss, eine RS232-Schnittstelle, ein USB-Anschluss, ein Überfalltaster, und/oder eine elektroakustische Anlage in das Steuersystem integriert.

Vorzugsweise verwendet die Funkschnittstelle ein Bluetooth^{®}- oder WLAN-Protokoll, so dass weiter bevorzugt ein Smartphone oder ein Laptop als die drahtlose Benutzerschnittstelle verwendet werden kann.

Die vorliegende Erfindung ist besonders bei einem Linienbus oder Personenzug geeignet, da dort entsprechende Peripherievorrichtungen angesteuert werden sollen.

Vorzugsweise sind die zentrale Datenleitung und/oder die ersten Datenleitungen Bestandteil eines Bussystems des Steuersystems und können demnach unter geringem Aufwand in das vorhandene Steuersystem implementiert werden.

Die vorliegende Erfindung betrifft auch ein Verfahren zum Austauschen von Daten in einem Massentransportmittel über eine Steuervorrichtung, wobei das Massentransportmittel einen Bordrechner aufweist, der über erste Datenleitungen mit ersten Peripherievorrichtungen verbunden ist, um mit diesen über das IBIS- oder IBIS-IP-Protokoll Daten auszutauschen. Das erfindungsgemäße Verfahren hat die folgenden Schritte: Verbinden der Steuervorrichtung mit dem Bordrechner über eine zentrale Datenleitung; Verbinden der Steuervorrichtung über zweite Datenleitungen mit zweiten Peripherievorrichtungen, um mit diesen ohne dem IBIS- oder IBIS-IP-Protokoll Daten auszutauschen; Einrichten einer drahtlosen Funkverbindung zwischen der Steuervorrichtung und einer drahtlosen Benutzerschnittstelle derart, dass zwischen der drahtlosen Benutzerschnittstelle und sowohl den ersten als auch den zweiten Peripherievorrichtungen über die Steuervorrichtung Daten ausgetauscht werden. Das erfindungsgemäße Verfahren umfasst außerdem die oben genannten ersten und/oder zweiten spezifischen Peripherievorrichtungen.

Die vorliegende Erfindung betrifft auch ein Steuersystem für ein Massentransportmittel, mit der erfindungsgemäßen Steuervorrichtung und einem zentralen Bordrechner, der über eine zentrale Datenleitung mit der Steuervorrichtung verbunden ist, und der dazu konfiguriert ist, über erste Datenleitungen mit ersten Peripherievorrichtungen verbunden zu werden. Vorzugsweise hat das Steuersystem des Weiteren eine drahtlose Benutzerschnittstelle.

Nachfolgend wird ein Ausführungsbeispiel der vorliegenden Erfindung anhand der Zeichnungen beschrieben. Es zeigen:
- Fig. 1: ein Ausführungsbeispiel eines Steuersystems gemäß der vorliegenden Erfindung; und
- Fig. 2: ein Systembild einer Steuervorrichtung bei dem Ausführungsbeispiel des Steuersystems gemäß der vorliegenden Erfindung.

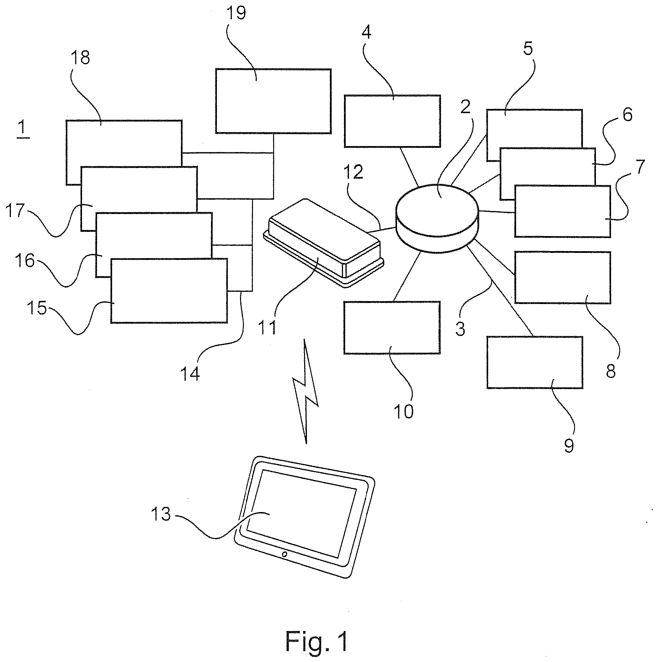

**Fig. 1** zeigt ein Ausführungsbeispiel eines Steuersystems 1 gemäß der vorliegenden Erfindung. Das Steuersystem 1 ist in einem Massentransportmittel wie zum Beispiel ein Linienbus oder Personenzug zu implementieren. Das Steuersystem 1 weist einen Bordrechner 2 auf, der über erste Datenleitungen 3 mit ersten Peripherievorrichtungen 4, 5, 6, 7, 8, 9, 10 verbunden ist, um mit diesen über das IBIS- oder IBIS-IP-Protokoll Daten auszutauschen. Darüber hinaus sind eine Steuervorrichtung 11, die mit dem Bordrechner 2 über eine zentrale Datenleitung 12 verbunden ist, und eine drahtlose Benutzerschnittstelle 13 vorgesehen. Die zentrale Datenleitung 12 und die ersten Datenleitungen 3 können Bestandteil eines vorhandenen Bussystems des Steuersystems 1 sein. Die Steuervorrichtung 11 ist über zweite Datenleitungen 14 mit zweiten Peripherievorrichtungen 15, 16, 17, 18, 19 verbunden, um mit diesen ohne dem IBIS- oder IBIS-IP-Protokoll Daten auszutauschen (zum Beispiel mit einem anderen Protokoll außer IBIS- oder IBIS-IP). Die Steuervorrichtung 11 weist eine Funkschnittstelle auf, die daran angepasst ist, eine drahtlose Funkverbindung mit der drahtlosen Benutzerschnittstelle 13 derart einzurichten, dass ein Datenaustausch zwischen der drahtlosen Benutzerschnittstelle 13 und sowohl den ersten Peripherievorrichtungen 4, 5, 6, 7, 8, 9, 10 als auch den zweiten Peripherievorrichtungen 15, 16, 17, 18, 19 über die Steuervorrichtung 11 erfolgt. Damit ist es möglich, dass der Benutzer über die drahtlose Benutzerschnittstelle 13, die über die Funkschnittstelle mit der Steuervorrichtung 11 verbunden ist, einen Steuerungszugriff auf die zweiten Peripherievorrichtungen 15, 16, 17, 18, 19 hat. Ferner ist es möglich, dass der Benutzer über die drahtlose Benutzerschnittstelle 13, die über die Funkschnittstelle mit der Steuervorrichtung 11 verbunden ist, welche wiederum über die zentrale Datenleitung 12 mit dem Bordrechner 2 verbunden ist, einen Steuerungszugriff auf die ersten Peripherievorrichtungen 4, 5, 6, 7, 8, 9, 10 hat.

Die ersten Peripherievorrichtungen 4, 5, 6, 7, 8, 9, 10 umfassen zum Beispiel eine Videokamera 4, eine Heckanzeige 5, eine Frontanzeige 6, eine Seitenanzeige 7, einen Fahrscheinentwerter 8, einen Fahrgastzähler 9 und/oder TFT-Monitore 10.

Durch die Steuervorrichtung 11 ist es möglich, als die zweiten Peripherievorrichtungen 15, 16, 17, 18, 19 beliebige Peripherievorrichtungen wie zum Beispiel einen Türsignalgeber 18, einen Wegsignalgeber, einen Bakensignalgeber, einen Tachosignalgeber 17, einen Wagenhaltsignalgeber, einen CAN-Bus 16, einen LAN/Ethernet-Anschluss, eine RS232-Schnittstelle, einen USB-Anschluss, einen Überfalltaster, und/oder eine elektroakustische Anlage 19 wie zum Beispiel eine Durchsagevorrichtung in das Steuersystem 1 zu integrieren. Darüber hinaus können weitere Anschlüsse 15 der Steuervorrichtung 11 je nach Anwendungsfall beliebig frei konfiguriert werden. Anders als bei den ersten Peripherievorrichtungen 4, 5, 6, 7, 8, 9, 10 ist es bei den zweiten Peripherievorrichtungen 15, 16, 17, 18, 19 nicht erforderlich, den Datenaustausch über das IBIS- oder IBIS-IP-Protokoll zu implementieren.

Die Funkschnittstelle verwendet das Bluetooth^{®}- oder WLAN-Protokoll, so dass als drahtlose Benutzerschnittstelle 13 ein handelsübliches Smartphone oder ein handelsüblicher Laptop eingesetzt werden kann.

Die Steuervorrichtung 11 und das Steuersystem 1 arbeiten folgendermaßen. Die Steuervorrichtung 11 wird zunächst über eine zentrale Datenleitung 12 mit dem Bordrechner 2 und über die zweiten Datenleitungen 14 mit den zweiten Peripherievorrichtungen 15, 16, 17, 18, 19 verbunden, um mit diesen ohne dem IBIS- oder IBIS-IP-Protokoll Daten austauschen zu können. Ferner wird eine drahtlose Funkverbindung zwischen der Steuervorrichtung 11 und der drahtlosen Benutzerschnittstelle 13 derart eingerichtet, dass zwischen der drahtlosen Benutzerschnittstelle 13 und sowohl den ersten Peripherievorrichtungen 4, 5, 6, 7, 8, 9, 10 als auch den zweiten Peripherievorrichtungen15, 16, 17, 18, 19 über die Steuervorrichtung 11 Daten ausgetauscht werden können.

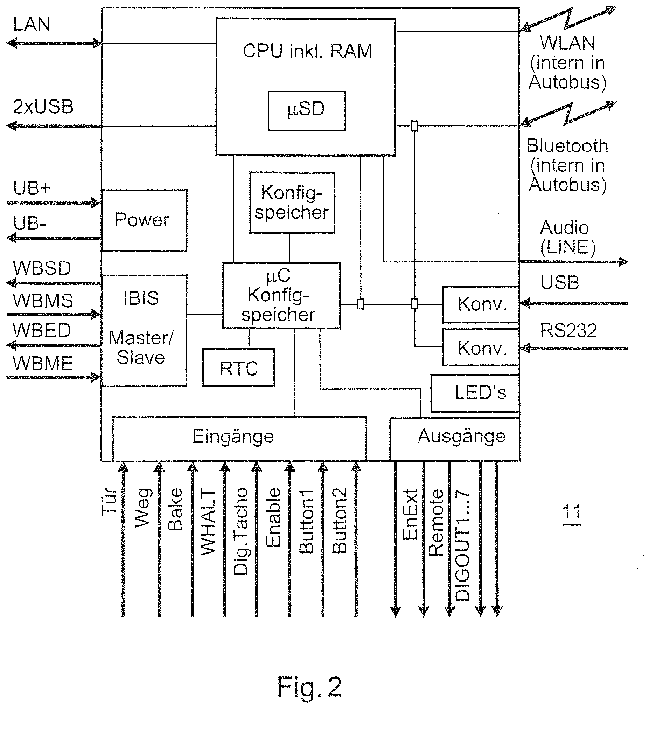

**Fig. 2** zeigt ein Systembild der Steuervorrichtung 11 bei dem Ausführungsbeispiel des Steuersystems 1 gemäß der vorliegenden Erfindung. Die Steuervorrichtung 11 hat intern einen Mikrocontroller (CPU) einschließlich eines überschreibbaren Arbeitsspeichers (RAM). Zusätzlich sind ein Stromversorgungsanschluss, ein Zeitgeber (RTC), verschiedene Konfigurationsspeicher und optische Anzeigemittel (LED's) in der Steuervorrichtung 11 vorgesehen.

Die Steuervorrichtung 11 hat unter anderem folgende Schnittstellen:
- eine IBIS-Schnittstelle für eine Verbindung mit dem IBIS-Bordrechner 2
- eine WLAN-Schnittstelle als die Funkschnittstelle
- eine Bluetooth^{®} -Schnittstelle als die Funkschnittstelle
- eine LAN/Ethernet-Schnittstelle
- USB-Schnittstellen, die zum Beispiel zur Wartung oder Konfiguration der Steuervorrichtung 11 verwendet werden können
- eine RS232-Schnittstelle
- einen CAN-Bus (nicht in der Fig. 2 gezeigt).

Die Steuervorrichtung 11 hat unter anderem folgende Ausgänge:
- einen Audioausgang, der zum Beispiel für die elektroakustische Anlage, einen Lautsprecher oder die Durchsagevorrichtung verwendet werden kann
- einen Digitalausgang
- einen Alarmausgang

Die Steuervorrichtung hat unter anderem folgende Eingänge für:
- Türsignalgeber
- einen Wegsignalgeber
- einen Bakensignalgeber
- einen Tachosignalgeber
- einen Wagenhaltsignalgeber
- einen digitalen Tachoeingang
- einen Tastereingang, an dem zum Beispiel ein Überfalltaster angeschlossen werden kann

### BEZUGSZEICHENLISTE

- 1: Steuersystem
- 2: Bordrechner
- 3: erste Datenleitung
- 4-10: erste Peripherievorrichtung
- 11: Steuervorrichtung
- 12: zentrale Datenleitung
- 13: drahtlose Benutzerschnittstelle
- 14: zweite Datenleitung
- 15-19: zweite Peripherievorrichtung

## Patentansprüche

1. Steuervorrichtung (11) für ein Massentransportmittel, das einen Bordrechner (2) aufweist, der über erste Datenleitungen (3) mit ersten Peripherievorrichtungen (4, 5, 6, 7, 8, 9, 10) verbunden ist, um mit diesen über das IBIS- oder IBIS-IP-Protokoll Daten auszutauschen,
**dadurch gekennzeichnet, dass**
- die Steuervorrichtung (11) dazu konfiguriert ist, mit dem Bordrechner (2) über eine zentrale Datenleitung (12) verbunden zu werden;
- die Steuervorrichtung (11) dazu konfiguriert ist, über zweite Datenleitungen (14) mit zweiten Peripherievorrichtungen (15, 16, 17, 18, 19) verbunden zu werden, um mit diesen ohne dem IBIS- oder IBIS-IP-Protokoll Daten auszutauschen;
- die Steuervorrichtung (11) eine Funkschnittstelle (20) aufweist, die daran angepasst ist, eine drahtlose Funkverbindung mit einer drahtlosen Benutzerschnittstelle (13) derart einzurichten, dass ein Datenaustausch zwischen der drahtlosen Benutzerschnittstelle (13) und sowohl den ersten Peripherievorrichtungen (4, 5, 6, 7, 8, 9, 10) als auch den zweiten Peripherievorrichtungen (15, 16, 17, 18, 19) über die Steuervorrichtung (11) erfolgt;
- wobei die ersten Peripherievorrichtungen (4, 5, 6, 7, 8, 9, 10) eine Videokamera (4), eine Heckanzeige (5), eine Frontanzeige (6), eine Seitenanzeige (7), einen Fahrscheinentwerter (8), einen Fahrgastzähler (9) und/oder TFT-Monitore (10) aufweisen; und
- wobei die zweiten Peripherievorrichtungen (15, 16, 17, 18, 19) einen Türsignalgeber (18), einen Wegsignalgeber, einen Bakensignalgeber, einen Tachosignalgeber (17), einen Wagenhaltsignalgeber, einen CAN-Bus (16), einen LAN/Ethernet-Anschluss, eine RS232-Schnittstelle, einen USB-Anschluss, einen Überfalltaster, und/oder eine elektroakustische Anlage (19) aufweisen.

2. Steuervorrichtung (11) für ein Massentransportmittel gemäß Anspruch 1, wobei die Funkschnittstelle ein Bluetooth^{®}- oder WLAN-Protokoll verwendet.

3. Steuervorrichtung (11) für ein Massentransportmittel gemäß einem der vorherigen Ansprüche, wobei
die drahtlose Benutzerschnittstelle (13) ein Smartphone oder ein Laptop ist.

4. Steuervorrichtung (11) für ein Massentransportmittel gemäß einem der vorherigen Ansprüche, wobei
das Massentransportmittel ein Linienbus oder ein Personenzug ist.

5. Steuervorrichtung (11) für ein Massentransportmittel gemäß einem der vorherigen Ansprüche, wobei
die zentrale Datenleitung (12) und/oder die ersten Datenleitungen (3) Bestandteil eines Bussystems des Massentransportmittels sind.

6. Verfahren zum Austauschen von Daten in einem Massentransportmittel über eine Steuervorrichtung (11), wobei das Massentransportmittel einen Bordrechner (2) aufweist, der über erste Datenleitungen (3) mit ersten Peripherievorrichtungen (4, 5, 6, 7, 8, 9, 10) verbunden ist, um mit diesen über das IBIS- oder IBIS-IP-Protokoll Daten auszutauschen,
**gekennzeichnet durch**
- Verbinden der Steuervorrichtung (11) mit dem Bordrechner (2) über eine zentrale Datenleitung (12);
- Verbinden der Steuervorrichtung (11) über zweite Datenleitungen (14) mit zweiten Peripherievorrichtungen (15, 16, 17, 18, 19), um mit diesen ohne dem IBIS- oder IBIS-IP-Protokoll Daten auszutauschen;
- Einrichten einer drahtlosen Funkverbindung zwischen der Steuervorrichtung (11) und einer drahtlosen Benutzerschnittstelle (13) derart, dass zwischen der drahtlosen Benutzerschnittstelle (13) und sowohl den ersten Peripherievorrichtungen (4, 5, 6, 7, 8, 9, 10) als auch den zweiten Peripherievorrichtungen (15, 16, 17, 18, 19) über die Steuervorrichtung (11) Daten ausgetauscht werden;
- wobei die ersten Peripherievorrichtungen (4, 5, 6, 7, 8, 9, 10) eine Videokamera (4), eine Heckanzeige (5), eine Frontanzeige (6), eine Seitenanzeige (7), einen Fahrscheinentwerter (8), einen Fahrgastzähler (9) und/oder TFT-Monitore (10) aufweisen; und
- wobei die zweiten Peripherievorrichtungen (15, 16, 17, 18, 19) einen Türsignalgeber (18), einen Wegsignalgeber, einen Bakensignalgeber, einen Tachosignalgeber (17), einen Wagenhaltsignalgeber, einen CAN-Bus (16), einen LAN/Ethernet-Anschluss, eine RS232-Schnittstelle, einen USB-Anschluss, einen Überfalltaster, und/oder eine elektroakustische Anlage (19) aufweisen.

7. Steuersystem (1) für ein Massentransportmittel, mit einer Steuervorrichtung (11) gemäß einem der Ansprüche 1 bis 5 und einem zentralen Bordrechner (2), der über eine zentrale Datenleitung (12) mit der Steuervorrichtung (11) verbunden ist, und der dazu konfiguriert ist, über erste Datenleitungen (3) mit ersten Peripherievorrichtungen (4, 5, 6, 7, 8, 9, 10) verbunden zu werden.

8. Steuersystem (1) gemäß Anspruch 7, des Weiteren mit einer drahtlosen Benutzerschnittstelle (13).

## Claims

1. Control device (11) for a mass transport means which has an on-board computer (2) connected via first data lines (3) to first peripheral devices (4, 5, 6, 7, 8, 9, 10) in order to exchange data therewith via the IBIS or IBIS-IP protocol,
**characterized in that**
- the control device (11) is configured to be connected to the on-board computer (2) via a central data line (12);
- the control device (11) is configured to be connected via second data lines (14) to second peripheral devices (15, 16, 17, 18, 19) in order to exchange data therewith without the IBIS or IBIS-IP protocol;
- the control device (11) has a radio interface (20) which is adapted to set up a wireless radio connection to a wireless user interface (13) in such a way that data exchange takes place between the wireless user interface (13) and both the first peripheral devices (4, 5, 6, 7, 8, 9, 10) and the second peripheral devices (15, 16, 17, 18, 19) via the control device (11);
- wherein the first peripheral devices (4, 5, 6, 7, 8, 9, 10) have a video camera (4), a rear display (5), a front display (6), a side display (7), a ticket validator (8), a passenger counter (9) and/or TFT monitors (10); and
- wherein the second peripheral devices (15, 16, 17, 18, 19) have a door signal generator (18), a route signal generator, a beacon signal generator, a tachometer signal generator (17), a carriage stop signal generator, a CAN bus (16), a LAN/Ethernet connection, an RS232 interface, a USB connection, an emergency button, and/or an electroacoustic system (19).

2. Control device (11) for a mass transport means according to claim 1, wherein the radio interface uses a Bluetooth^{®} or WLAN protocol.

3. Control device (11) for a mass transport means according to any one of the preceding claims, wherein
the wireless user interface (13) is a smartphone or a laptop.

4. Control device (11) for a mass transport means according to any one of the preceding claims, wherein
the mass transport means is a public bus or a passenger train.

5. Control device (11) for a mass transport means according to any one of the preceding claims, wherein
the central data line (12) and/or the first data lines (3) are part of a bus system of the mass transport means.

6. Method for exchanging data in a mass transport means via a control device (11), wherein the mass transport means has an on-board computer (2) connected via first data lines (3) to first peripheral devices (4, 5, 6, 7, 8, 9, 10) in order to exchange data therewith via the IBIS or IBIS-IP protocol,
**characterized by**
- connecting the control device (11) to the on-board computer (2) via a central data line (12);
- connecting the control device (11) via second data lines (14) to second peripheral devices (15, 16, 17, 18, 19) in order to exchange data therewith without the IBIS or IBIS-IP protocol;
- setting up a wireless radio connection between the control device (11) and a wireless user interface (13) in such a way that data are exchanged between the wireless user interface (13) and both the first peripheral devices (4, 5, 6, 7, 8, 9, 10) and the second peripheral devices (15, 16, 17, 18, 19) via the control device (11);
- wherein the first peripheral devices (4, 5, 6, 7, 8, 9, 10) have a video camera (4), a rear display (5), a front display (6), a side display (7), a ticket validator (8), a passenger counter (9) and/or TFT monitors (10); and
- wherein the second peripheral devices (15, 16, 17, 18, 19) have a door signal generator (18), a route signal generator, a beacon signal generator, a tachometer signal generator (17), a carriage stop signal generator, a CAN bus (16), a LAN/Ethernet connection, an RS232 interface, a USB connection, an emergency button, and/or an electroacoustic system (19).

7. Control system (1) for a mass transport means, with a control device (11) according to any one of claims 1 to 5 and a central on-board computer (2) which is connected via a central data line (12) to the control device (11) and which is configured to be connected via first data lines (3) to first peripheral devices (4, 5, 6, 7, 8, 9, 10).

8. Control system (1) according to claim 7, further having a wireless user interface (13).

## Revendications

1. Dispositif de commande (11) d'un moyen de transport de masse qui présente un ordinateur de bord (2) qui est connecté à de premiers dispositifs périphériques (4, 5, 6, 7, 8, 9, 10) par l'intermédiaire de premières lignes de données (3) pour échanger des données avec ceux-ci par l'intermédiaire du protocole IBIS ou IBIS-IP,
**caractérisé en ce que**
- le dispositif de commande (11) est configuré pour être connecté à l'ordinateur de bord (2) par l'intermédiaire d'une ligne de données centrale (12) ;
- le dispositif de commande (11) est configuré pour être connecté à de seconds dispositifs périphériques (15, 16, 17, 18, 19) par l'intermédiaire de secondes lignes de données (14) pour échanger des données avec ceux-ci sans le protocole IBIS ou IBIS-IP ;
- le dispositif de commande (11) présente une interface radio (20) qui est adaptée pour établir une liaison radio sans fil avec une interface utilisateur sans fil (13), de sorte qu'un échange de données entre l'interface utilisateur sans fil (13) et à la fois les premiers dispositifs périphériques (4, 5, 6, 7, 8, 9, 10) et les seconds dispositifs périphériques (15, 16, 17, 18, 19) s'effectue par l'intermédiaire du dispositif de commande (11) ;
- dans lequel les premiers dispositifs périphériques (4, 5, 6, 7, 8, 9, 10) présentent une caméra vidéo (4), un affichage arrière (5), un affichage avant (6), un affichage latéral (7), un valideur de billet (8), un compteur de passagers (9) et/ou des moniteurs TFT (10) ; et
- dans lequel les seconds dispositifs périphériques (15, 16, 17, 18, 19) présentent un émetteur de signal de porte (18), un émetteur de signal de déplacement, un émetteur de signal de balise, un émetteur de signal de tachymètre (17), un émetteur de signal d'arrêt de voiture, un bus CAN (16), une connexion LAN/Ethernet, une interface RS232, une connexion USB, un bouton d'agression, et/ou une installation électroacoustique (19).

2. Dispositif de commande (11) pour un moyen de transport de masse selon la revendication 1, dans lequel l'interface radio utilise un protocole Bluetooth^{®} ou WLAN.

3. Dispositif de commande (11) pour un moyen de transport de masse selon l'une quelconque des revendications précédentes, dans lequel
l'interface utilisateur sans fil (13) est un smartphone ou un ordinateur portable.

4. Dispositif de commande (11) pour un moyen de transport de masse selon l'une quelconque des revendications précédentes, dans lequel
le moyen de transport de masse est un bus urbain ou un train de passagers.

5. Dispositif de commande (11) pour un moyen de transport de masse selon l'une quelconque des revendications précédentes, dans lequel
la ligne de données centrale (12) et/ou les premières lignes de données (3) font partie d'un système de bus du moyen de transport de masse.

6. Procédé d'échange de données dans un moyen de transport de masse par l'intermédiaire d'un dispositif de commande (11), dans lequel le moyen de transport de masse présente un ordinateur de bord (2) qui est connecté à de premiers dispositifs périphériques (4, 5, 6, 7, 8, 9, 10) par l'intermédiaire de premières lignes de données (3) pour échanger des données avec ceux-ci par l'intermédiaire du protocole IBIS ou IBIS-IP,
**caractérisé par**
- la connexion du dispositif de commande (11) à l'ordinateur de bord (2) par l'intermédiaire d'une ligne de données centrale (12) ;
- la connexion du dispositif de commande (11) à de seconds dispositifs périphériques (15, 16, 17, 18, 19) par l'intermédiaire de lignes de données secondaires (14) pour échanger des données avec ceux-ci sans le protocole IBIS ou IBIS-IP ;
- l'établissement d'une liaison radio sans fil entre le dispositif de commande (11) et une interface utilisateur sans fil (13) de sorte que des données soient échangées entre l'interface utilisateur sans fil (13) et à la fois les premiers dispositifs périphériques (4, 5, 6, 7, 8, 9, 10) et les seconds dispositifs périphériques (15, 16, 17, 18, 19) par l'intermédiaire du dispositif de commande (11) ;
- dans lequel les premiers dispositifs périphériques (4, 5, 6, 7, 8, 9, 10) présentent une caméra vidéo (4), un affichage arrière (5), un affichage avant (6), un affichage latéral (7), un valideur de billet (8), un compteur de passagers (9) et/ou des moniteurs TFT (10) ; et
- dans lequel les seconds dispositifs périphériques (15, 16, 17, 18, 19) présentent un émetteur de signal de porte (18), un émetteur de signal de déplacement, un émetteur de signal de balise, un émetteur de signal de tachymètre (17), un émetteur de signal d'arrêt de voiture, un bus CAN (16), une connexion LAN/Ethernet, une interface RS232, une connexion USB, un bouton d'agression, et/ou une installation électroacoustique (19).

7. Système de commande (1) pour un moyen de transport de masse, avec un dispositif de commande (11) selon l'une quelconque des revendications 1 à 5 et un ordinateur de bord central (2) qui est connecté au dispositif de commande (11) par l'intermédiaire d'une ligne de données centrale (12) et qui est configuré pour être connecté à de premiers dispositifs périphériques (4, 5, 6, 7, 8, 9, 10) par l'intermédiaire de premières lignes de données (3).

8. Système de commande (1) selon la revendication 7, avec en outre une interface utilisateur sans fil (13).
